# EUROPEAN PATENT APPLICATION

(11) **EP 4 742 065 A1**
(43) Date of publication of application: **13.05.2026**
(21) Application number: 25211761.9
(22) Date of filing: 28.10.2025
(51) Int. Cl.: G06F 21/10, H04L 9/08, H04L 9/32, H04L 9/00, H04L 9/40, H04W 12/08

(54) **NON-TRANSITORY COMPUTER READABLE MEDIUM, APPARATUS**

(30) Priority: 11.11.2024 US 202418942850
(71) Applicant: INTEL Corporation, Santa Clara, CA 95054 (US)
(72) Inventor: ZMIJEWSKI, Piotr, 80-119 Gdansk PM (PL); BERENT, Arkadiusz, 80-209 Tuchom, Pomorskie (PL); BRONK, Mateusz, 80288 Gdansk (PL); MATUSIEWICZ, Krystian, 80-177 Gdansk PM (PL)
(74) Representative: 2SPL Patentanwälte PartG mbB

(57) **Abstract**

Provided is a non-transitory machine-readable medium including machine-readable instructions. The machine-readable instructions cause, when executed on an apparatus, the apparatus to receive, by a trusted authority, a request for access to user data stored on a distributed network. The machine-readable instructions further cause the apparatus to search, by the trusted authority, an immutable ledger for an entry related to the user data. The machine-readable instructions further cause the apparatus to selectively decide, by the trusted authority and based on an access policy for the user data indicated by the entry, whether to grant access to the user data.

## Description

### Background

Users using services among distributed networks (e.g., the Internet) may be required to share personal data in order to be able to use the services. On the other hand, the user may need to be able to request removal of the personal data from the network (e.g., effectively requesting it to be "forgotten", for example to fulfill GDPR's (general data protection regulation) "right to be forgotten", or to fulfill other regulations or laws). The request may cause to restrict access to the data, or to truly/completely remove the data. In the latter case, all the data sets that came into life as the result of processing the original data set (be it a subset, superset or new data derived based on the original data) may need to be altered or removed as well, effectively bringing the state of the network back to a point where that original data fictionally never existed.

### Brief description of the Figures

Some examples of apparatuses and/or methods will be described in the following by way of example only, and with reference to the accompanying figures, in which
Fig. 1 illustrates a block diagram of an apparatus according to the present disclosure;
Fig. 2 illustrates a block diagram of an apparatus according to the present disclosure;
Fig. 3 depicts a flowchart of a method according to the present disclosure;
Fig. 4 depicts a flowchart of a method according to the present disclosure;
Fig. 5 depicts a flowchart of a method for data creation and registration according to the present disclosure;
Fig. 6 depicts a flowchart of a method for revoking access to data according to the present disclosure;
Fig. 7 depicts a sequence diagram of a method for data creation according to the present disclosure;
Fig. 8 depicts a sequence diagram of a method for data access and derivate creation according to the present disclosure; and
Fig. 9 depicts a sequence diagram of a method for data revocation according to the present disclosure.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

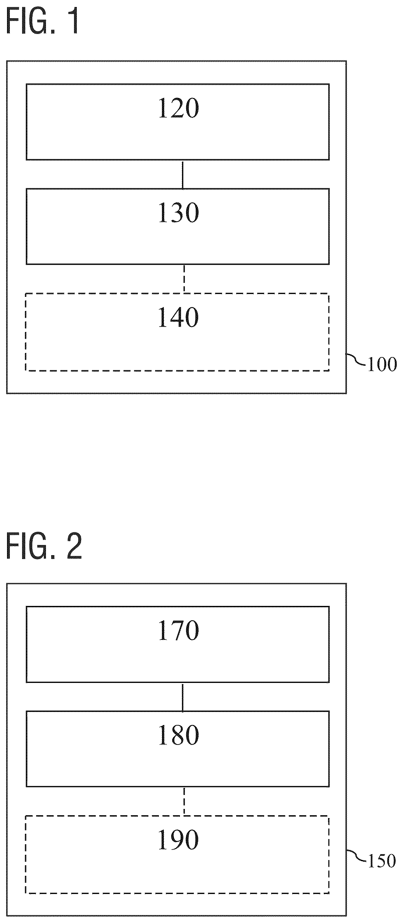

Fig. 1 illustrates a block diagram of an example of an apparatus 100 (or device 100). The apparatus 100 includes circuitry that is configured to provide the functionality of the apparatus 100. For example, the apparatus 100 of Fig. 1 includes interface circuitry 120, processing circuitry 130 and (optional) storage circuitry 140. For example, the processing circuitry 130 may be coupled with the interface circuitry 120 and optionally with the storage circuitry 140.

For example, the processing circuitry 130 may be configured to provide the functionality of the apparatus 100, in conjunction with the interface circuitry 120. For example, the interface circuitry 120 is configured to exchange information, e.g., with other components inside or outside the apparatus 100 and the storage circuitry 140. Likewise, the device 100 may include means configured to provide the functionality of the device 100.

The components of the device 100 are defined as component means, which may correspond to, or implemented by, the respective structural components of the apparatus 100. For example, the device 100 of Fig. 1 includes means for processing 130, which may correspond to or be implemented by the processing circuitry 130, means for communicating 120, which may correspond to or be implemented by the interface circuitry 120, and (optional) means for storing information 140, which may correspond to or be implemented by the storage circuitry 140. In the following, the functionality of the device 100 is illustrated with respect to the apparatus 100. Features described in connection with the apparatus 100 may thus likewise be applied to the corresponding device 100.

**In** general, the functionality of the processing circuitry 130 or means for processing 130 may be implemented by the processing circuitry 130 or means for processing 130 executing machine-readable instructions. Accordingly, any feature ascribed to the processing circuitry 130 or means for processing 130 may be defined by one or more instructions of a plurality of machine-readable instructions. The apparatus 100 or device 100 may include the machine-readable instructions, e.g., within the storage circuitry 140 or means for storing information 140.

The interface circuitry 120 or means for communicating 120 may correspond to one or more inputs and/or outputs for receiving and/or transmitting information, which may be in digital (bit) values according to a specified code, within a module, between modules or between modules of different entities. For example, the interface circuitry 120 or means for communicating 120 may include circuitry configured to receive and/or transmit information.

For example, the processing circuitry 130 or means for processing 130 may be implemented using one or more processing units, one or more processing devices, any means for processing, such as a processor, a computer or a programmable hardware component being operable with accordingly adapted software. In other words, the described function of the processing circuitry 130 or means for processing 130 may as well be implemented in software, which is then executed on one or more programmable hardware components. Such hardware components may include a general-purpose processor, a Digital Signal Processor (DSP), a micro-controller, etc.

For example, the storage circuitry 140 or means for storing information 140 may include at least one element of the group of a computer readable storage medium, such as a magnetic or optical storage medium, e.g., a hard disk drive, a flash memory, Floppy-Disk, Random Access Memory (RAM), Read Only Memory (ROM), Programmable Read Only Memory (PROM), Erasable Programmable Read Only Memory (EPROM), an Electronically Erasable Programmable Read Only Memory (EEPROM), or a network storage.

The apparatus 100 may be realized as a computer, such as a server or multiple servers, a personal computer, a corporate computer, or the like.

As indicated above, the processing circuitry may implement machine-readable instructions. Such machine-readable instructions may relate to non-transitory machine-readable instructions and may be stored on the storage circuitry 140, without limiting the present disclosure in that regard.

For example, the storage circuitry 140 may include or relate to a non-transitory machine-readable medium including machine-readable instructions which, when executed on the apparatus 100, cause the apparatus 100 (or the processing circuitry 130) to carry out the functions discussed herein.

The machine-readable instructions cause the apparatus 100 to receive, by a trusted authority, a request for access to user data stored on a distributed network.

A trusted authority may relate to or include a trusted execution environment (TEE), for example. However, any other trusted authority which may ensure data protection may serve as the trusted authority according to the present disclosure. For example, a confidential computing environment may be applied within or as the trusted authority.

Confidential computing may refer to computing, i.e., processing of data, which is carried out in a secure environment, such as a CCE (confidential computing environment), which may provide hardware-based security features, both within the processing circuitry 130 and across the broader computing system including the processing circuitry 130, to protect data in use from unauthorized access and tampering.

For example, memory encryption may be used for ensuring that the contents of the system memory (e.g., RAM) are encrypted to protect data even if physical access to the memory is obtained. Further, features such as I/O isolation secure input/output operations, preventing data leakage during transit between the processing circuitry and peripheral devices may be used.

Together, these processing circuitry and system-level features may provide a robust foundation for secure computing, ensuring that sensitive information and computations are protected throughout their lifecycle. TEEs operating on the system software may rely on the underlying system software for its initialization, execution, and management. The system software provides the necessary services and interfaces for the TEE to function securely and efficiently. A TEE may be provided within or by the processing circuitry and create isolated and secure areas for executing sensitive computations and storing confidential data. A TEE may be hosted within a CCE, such that confidential computing may be possible.

A CCE may include one or more hierarchical layered environments. Each of the one or more layered environments may be specifically designed to perform distinct computing functions within the CCE. These layers may be hierarchically structured such that a lower layer may support and attest to the integrity of a layer above it, ensuring a continuous chain of trust throughout the CCE. For example, a lower layered environment may receive a measurement from the environment layered above and sign it with its private key. The one or more layered environments may be categorized into layers based on their functions within the CCE. The layers may be logically and/or hardware-separated based on their specific functions, roles, and responsibilities within the CCE, ensuring a structured and secure computing framework. For example, there may be one or more layers designed to perform foundational security functions, such as a root of trust (RoT). The foundational security provides the essential security mechanisms and trust anchors upon which the entire framework is built. For example, the foundational security framework may include layers responsible for secure boot, cryptographic key management, and integrity verification. One example is the Device Identifier Composition Engine (DICE), which creates a chain of trust through layered identities and attestation. DICE may be defined in the specification "DICE Attestation Architecture" by the Trusted Computing Group, Version 1.1, Revision 0.18, January 6, 2024.

In such an environment, for example, attestation may be carried out which may refer to a mechanism that reports on protection and integrity properties of the respective TEE and also on target environments (TE), such as the RoT and layers in between (e.g., firmware layer, integrity register layer, and the like).

As indicated above, the trusted authority may receive a request for access to user data stored on a distributed network.

User data may refer to any data that a user has generated in the distributed network and which is destined to be stored in the distributed network, e.g., on a server of the distributed network. For example, user data refers to any information that is collected from or about individuals interacting with a system, application, or service. This data may include one or more of personal details, preferences, behavior patterns, device information, and any inputs provided by the user.

Such user data may be acquired by third parties (parties other than the user and the apparatus 100), for example to personalize experiences, improve services, and deliver targeted content or recommendations based on individual preferences and behaviors. It may also help companies (as third parties) to analyze trends, optimize their products, and make data-driven decisions to enhance user satisfaction and engagement.

In order to use the user data, the third parties may need access to the user data, but the user data may be encrypted such that the third parties do not have immediate access. Moreover, the user data may be stored in the distributed network, such that a location of the user data may not be known to the third parties. Data access may refer to the ability to retrieve, view, or interact with the user data that is stored on the distributed network. A distributed network may refer to a system of interconnected computers or devices that work together to share resources, data, and tasks across multiple locations, such as the Internet.

Therefore, the apparatus 100 may provide or may have access to an immutable ledger in which indications (or entries) relating to the user data may be stored. An immutable ledger may refer to a database or record-keeping system where data entries, once written, cannot be altered, deleted, or tampered with. This may ensure that all transactions or records are permanent and traceable, providing a transparent and trustworthy audit trail. For example, an RoT may be used for ensuring immutability of the immutable ledger. An indication relating to the user data may include a key to decrypt the user data, for example. In some examples, instead of the key, a key identifier may be included, for example, if the key to access the user data is additionally protected, e.g., by being wrapped/encrypted (e.g., by another key that is owned/encrypted by the trusted authority). In some instances, if the location of the user data is not known to the third party, the third party may retrieve the user data location from the immutable ledger, as well.

The machine-readable instructions further cause the apparatus 100 to search, by the trusted authority, the immutable ledger for an entry related to the user data. For example, the immutable ledger may implement a Merkle tree. A Merkle tree may refer to a data structure used to efficiently and securely verify integrity of large sets of data. It may organize the user data into a hierarchical tree structure, where each leaf node represents a data block, and non-leaf nodes may store cryptographic hashes of their child nodes. This structure may allow quick verification of data integrity, as any change in the data would alter the hashes up to the root.

In such an example, a node may correspond to an entry that is generated when the user data has been used. The root of the Merkle tree may correspond to an entry that indicates the user data directly. However, the present disclosure is not limited to the case of a Merkle tree and other data structures may be used, such as a Patricia tree, a Verkle tree, an accumulator tree, a binary hash tree, or the like.

Searching for data in trees like Merkle trees, Patricia tries, or Verkle trees may involve starting at the root and traversing the nodes based on specific rules. In Merkle trees, a path determined by hash values may be followed, verifying the data's presence by checking hashes from the leaf to the root. In Patricia trees, the search may be based on matching segments of a search key with edges, ultimately leading to the target node or identifying its absence. Verkle trees may use a similar traversal method but may offer more efficient lookups by combining elements of Merkle trees and vector commitments for faster verification.

However, the present disclosure is not limited to any ledger or tree-structure that is used.

After reception of the request for access, the trusted authority may selectively decide whether to grant access to the user data. In this context, "selectively" may refer to a decision that may be based on a discrimination between third parties that are allowed to access and third parties that are not allowed to access according to the access policy. An access policy for the user data may refer to a set of rules or guidelines that determine who can access specific user information, under what conditions, and for what purposes. It may defines permissions, restrictions, and procedures for handling data to ensure privacy, security, and compliance with legal or organizational standards. These policies may be designed to protect user data from unauthorized access while allowing legitimate use by authorized individuals or systems. Such an access policy may be set by the user that creates the user data or may be defined by law, for example. Also, the access policy may be updated in that it may restrict access for a third party that used to have access or in that it may allow access for a third party whose access was previously restricted by changing at least one rule or guideline. The update may be based on user instructions, based on an updated law, or the like. The access policy may be stored together with the entry or may be stored on a different location.

In other words, the machine-readable instructions further cause the apparatus 100 to selectively decide, by the trusted authority and based on an access policy for the user data indicated by the entry, whether to grant access to the user data.

In some examples, the machine-readable instructions further include instructions to receive, by the trusted authority, an updated access policy, as discussed above. The machine-readable instructions may further include instructions to selectively revoke the user data (or access to the user data) based on the updated access policy.

For example, if the user wishes to delete or remove the user data, the user data may be revoked in accordance with the access policy. There may be different ways of revoking data, such as deep removal or shallow removal. In shallow removal, access to the user data may be removed or restricted. For example, a node of the tree-structure may be invalidated, a key may be invalidated, or the like. In deep removal, access to the user data may be restricted and to all the products that were generated based on the user data. In deep removal, the tree may need to be fully inspected and derived or aggregated data that was generated based on the user data may need to be removed. Alternatively, if possible, derived or aggregated data may be rolled back to a state where the user data was not part of it, e.g., by creating a branch/node in the tree-structure that can still be accessed but which does not include indications to the user data.

In some examples, for selectively revoking the user data, the machine-readable instructions further include instructions to selectively invalidate a key provided for the user data, as discussed above.

For example, the key may be invalidated by revoking the key through a certificate authority (CA) or a similar trusted entity. For example, the CA may update a revocation list, such as a Certificate Revocation List (CRL) or may use an Online Certificate Status Protocol (OCSP), to indicate that the key is no longer valid. By doing this, even if the key is still technically usable, it is flagged as untrustworthy, preventing its use for secure communications. On the other hand, the key may be (securely) destroyed, e.g., by permanently erasing it or by making it unrecoverable.

If a participant already has retrieved a key, even if the key is invalidated as described above, the participant may still be able to decrypt the data. However, in some examples, the use of the key may be time limited (e.g., by a policy) requiring the participant to make a new request to use the key after the time has passed (may be enforced by the TEE). So, invalidation may not be instant for the given participant but eventually, they will no longer have access to the key. In some examples, the certificate authority may issue the key together with a short-lived CRL that may need to be re-fetched after a predetermined amount of time to check the revocation status, or using a OCSP responder to verify the revocation status of the certificate before each use (which may be instant). In some examples, a "kill pill" may be sent by the trusted authority to the affected participant, effectively killing all the processing with the revoked key by the participant.

In some examples, for selectively revoking the user data, the machine-readable instructions further include instructions to revoke access to the user data for at least one participant in the distributed network, as discussed above.

In some examples, for selectively revoking the user data, the machine-readable instructions further include instructions to revoke access to third party data, wherein the third party data are generated by a participant in the distributed network based on the user data.

For example, the third party data includes derived data, is (entirely) derived data, or is included in aggregated data. Derived data may refer to data that is generated based on the user data, but in which the user data is not directly part of (anymore). Aggregated data may refer to data that is generated based on the user data and in which the user data is present, such that it may be possible to remove the user data from the aggregated data without tampering with the rest of the aggregated data. Thus, in some examples, if the third party data is included in aggregated data and access to the third party data is revoked, other data of the aggregated data remains accessible.

In some examples, if access to the user data is granted, the machine-readable instructions further include instructions to provision, by the trusted authority, a key to access the user data based on a remote attestation. Remote attestation may refer to a security mechanism that allows one system to verify the integrity and trustworthiness of another system's hardware or software remotely. It may work by having the target system (i.e., the third party) generate a cryptographic proof of its current state, e.g., using a Trusted Platform Module (TPM), a RoT, or the like. This proof may then be sent to a verifying party (e.g., the apparatus 100), which may check it against known, trusted configurations to ensure that the system has not been tampered with or compromised. Remote attestation may be used in CCEs to confirm that only trusted software is running before granting access or performing sensitive operations.

Fig. 2 depicts an apparatus 150 according to the present disclosure. The apparatus 150 includes interface circuitry 170, processing circuitry 180 and (optional) storage circuitry 190, which may be similar to the interface circuitry, processing circuitry and storage circuitry as already discussed under reference of Fig. 1, such that repetitive description of these components is omitted. The apparatus 150 may be the same as or a different apparatus than the apparatus 100 discussed under reference of Fig. 1. Similar as the apparatus of Fig. 1, the apparatus 150 of Fig. 2 includes a non-transitory machine-readable medium (e.g., stored on the storage circuitry 140) which cause the apparatus 150 to carry out the functions as discussed herein.

The machine-readable instructions include instructions to receive, by a trusted authority, key data related to user data, wherein the user data are stored or are to be stored on a distributed network. The key data may include the key or an indication to a key (e.g., a storage place).

The machine-readable instructions further include instruction to create, by the trusted authority, a tree-structure of an immutable ledger, wherein a root of the tree-structure indicates at least an identifier (e.g., the key or a location of the key) for the user data, as discussed above.

The machine-readable instructions further include instruction to create by the trusted authority, when a participant of the distributed network generates third party data based on the user data, a node in the tree-structure indicating at least an identifier for the third party data, as discussed above.

In some examples, the user data are generated by a first participant (e.g., the user) and the third party data are generated by a second participant (e.g., the third party) of the distributed network. In such examples, the machine-readable instructions further include instructions to, in response to a revocation of the user data (e.g., by the user), create a node in the tree-structure indicating at least an identifier for amended third party data corresponding to the third party data with indications to the user data being removed from the third party data.

As indicated above, the amended third party data may be aggregated data without the user data or derived data rolled back to a state in which the user data was not part of the derived data.

In some examples, the identifier for the third party data includes a key (or a location of the key) for decrypting the third party data generated based on the key for decrypting the user data. For example, if the user data is to be re-encrypted, the original key may be reused to encrypt the modified data, thereby maintaining consistency in the encryption scheme. However, if a new encryption is to occur after data changes (e.g., derivation or aggregation), a new key may be generated (e.g., based on threshold cryptography where two parties/keys may need to participate in the decryption of the derived/aggregated data, see also below), e.g., using a cryptographic key derivation function (KDF) or random key generation process. This new key may ensure that even minor alterations in the data result in a different encrypted output, enhancing security by preventing potential patterns or relationships from being inferred.

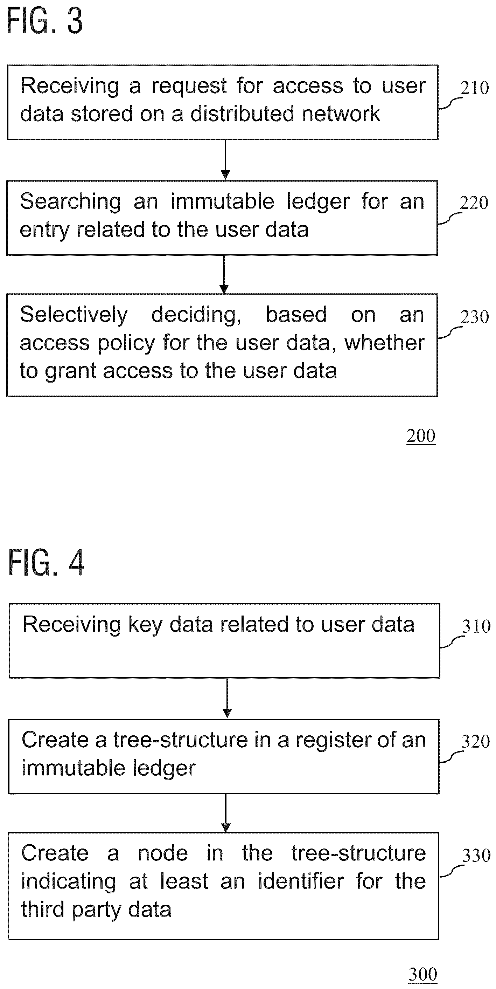

Fig. 3 depicts a method 200 which may be carried out on the apparatus 100 (or 150). The method 200 includes receiving, 210, by a trusted authority, a request for access to user data stored on a distributed network. The method 200 further includes searching, 220, by the trusted authority, an immutable ledger for an entry related to the user. The method 200 further includes selectively deciding, 230, by the trusted authority and based on an access policy for the user data indicated by the entry, whether to grant access to the user data.

Fig. 4 depicts a method 300 which may be carried out on the apparatus 150 (or 100). The method 300 includes receiving, 310, by a trusted authority, key data related to user data, wherein the user data are stored or are to be stored on a distributed network. The method 300 further includes creating, 320, by the trusted authority, a tree-structure of an immutable ledger, wherein a root of the tree-structure indicates at least an identifier for the user data. The method 300 further includes, when a participant of the distributed network generates third party data based on the user data, creating, 330, by the trusted authority, a node in the tree-structure indicating at least an identifier for the third party data.

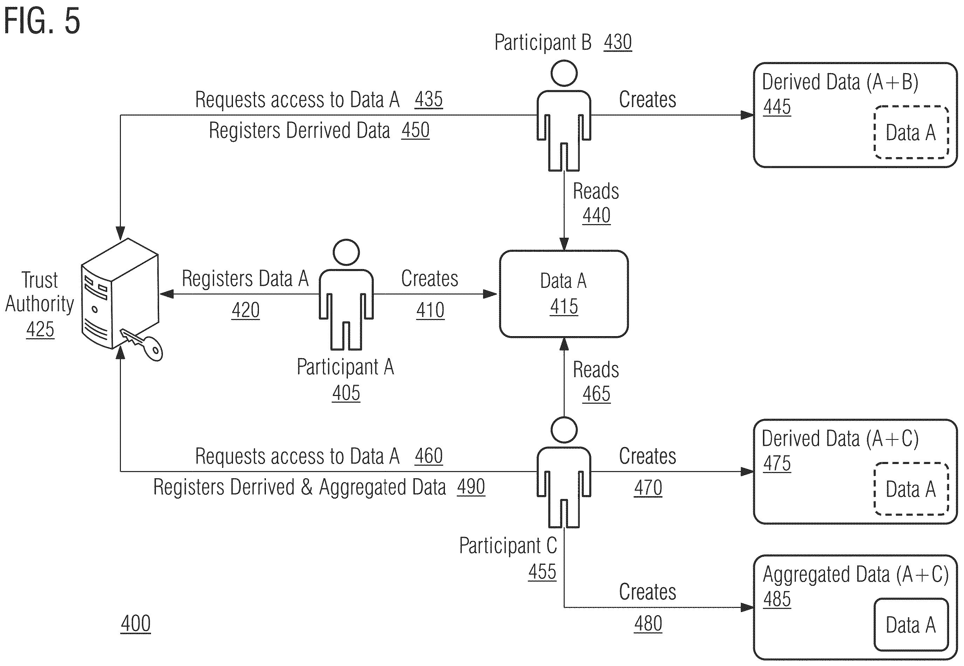

Fig. 5 depicts a flowchart of a method 400 for data creation and registration according to the present disclosure. Fig. 5 depicts (in a high level manner) the process of data being created by one of the participants (participant A 405) of the network and then registered in a trust authority 425. All the other participants of the network need to gain approval for accessing that data (by the trust authority 425) before they can read and potentially modify it. While the original data is being modified, the resulting derivates are also registered in the trust authority 425 by the participants making the modifications (together with the information about its composition and new co-ownership).

In particular, the method 400 includes creating, 410, data A 415 and registering, 420, data A with the trust authority 425 by participant A 405. The method 400 further includes (by participant B 430) requesting, 435, access to data A and subsequently reading, 440, data A. However, access to data A may happen before the request 435, but participant B 430 may not be able to decrypt data A without the key being provided by the trust authority 425. Based on data A, participant B 430 creates derived data (A+B) 445 and registers, 450, the derived data 445 with the trust authority 425. Likewise, participant C 455 requests, 460, access to data A and reads them, 465. Participant C 455 creates, 470, derived data (A+C) based on the data A, and creates, 480, aggregated data (A+C) 485 based on data A.

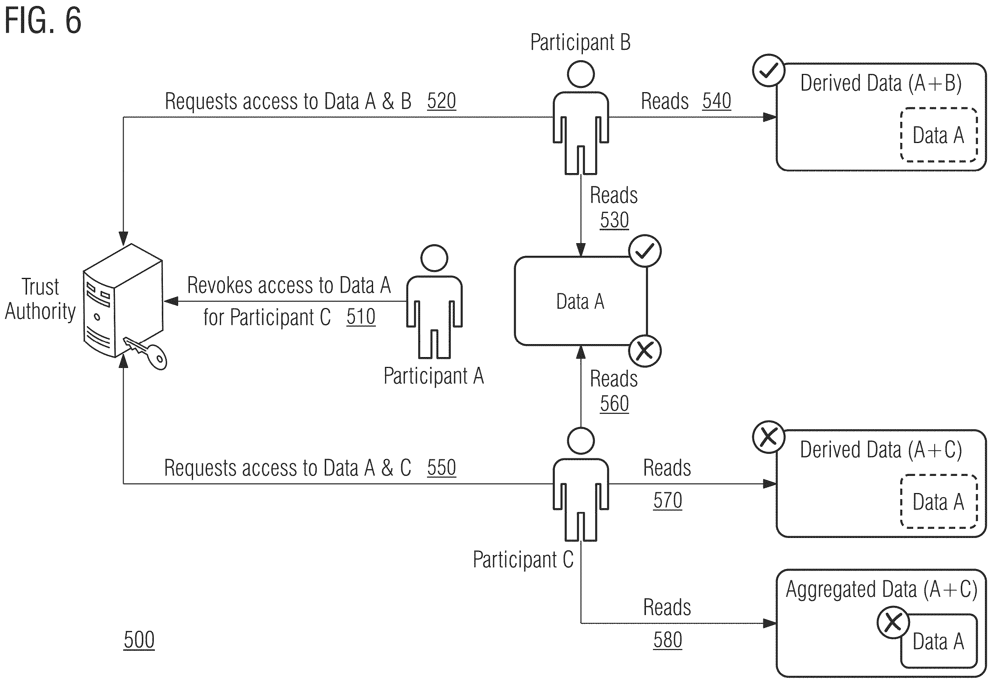

Fig. 6 depicts a flowchart of a method 500 for revoking access to data according to the present disclosure. Fig. 5 depicts the idea of effectively pushing a "stop button" by the owner of the original data (i.e., participant A 405), disallowing selected participants of the network from accessing both the original data and all of its derivatives. While participant B 430 can still access Data A and its derivatives, participant C 455 is excluded from accessing Data A and all its derivatives by Participant A's formal request to revoke access. It should be noted that the aggregated data 485 may be such that it is feasible to easily remove the original data A 415 from the aggregated data 485, such that participant C 455 may still be able to access the rest of the aggregated data 485.

In particular, the method 500 includes revoking, 510, access to data A for participant C (by participant A) with the trust authority 425. When participant B requests, 520, access to the derived data 455, the trust authority 425 allows the access, such that participant B is able to read, 430, data A and to read, 540, derived data 455. However, the request, 550, of participant C to access derived data 475 or derived data 485 is denied by the trust authority 425. Therefore, reading, 560, data A is denied, as well as reading, 570, derived data 475, and reading 580, derived data 485.

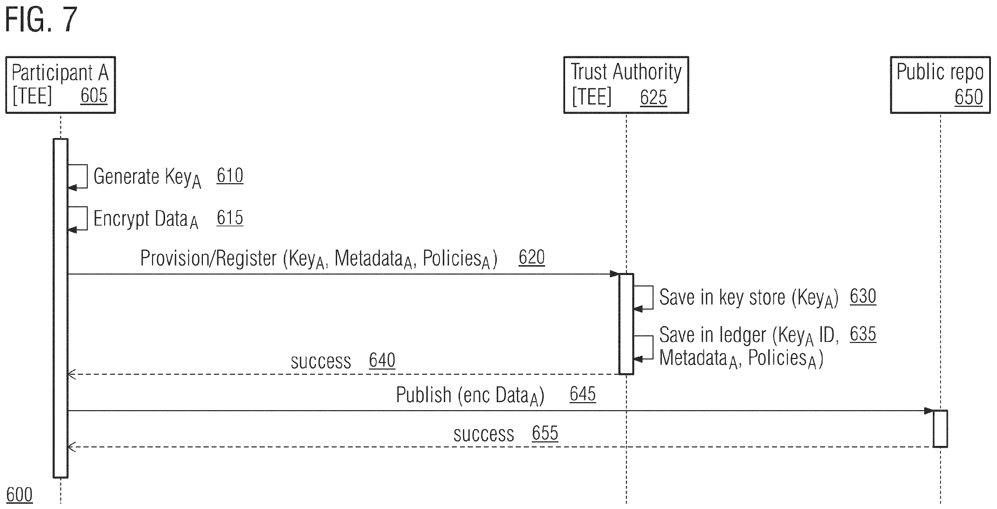

Fig. 7 depicts a sequence diagram of a method 600 for data creation according to the present disclosure.

The method includes, by participant A 605, generating, 610, a Key and encrypting, 615, data with the key. Participant A securely provisions, 620, the key (e.g., together with metadata such as ownership, location, and the like) and a policy (e.g., terms on who/how/when can access the data) to a trust authority 625, which saves, 630 the key in a key storage, and which registers or saves, 635, corresponding data in an immutable ledger. The trust authority 625 may transmit, 640, to participant A 605 that the process has been successful and in response, participant A 605 may publish, 645, encrypted data in a public repository 650, which in turn, may transmit, 655, a message to participant A 605 that the process has been successful.

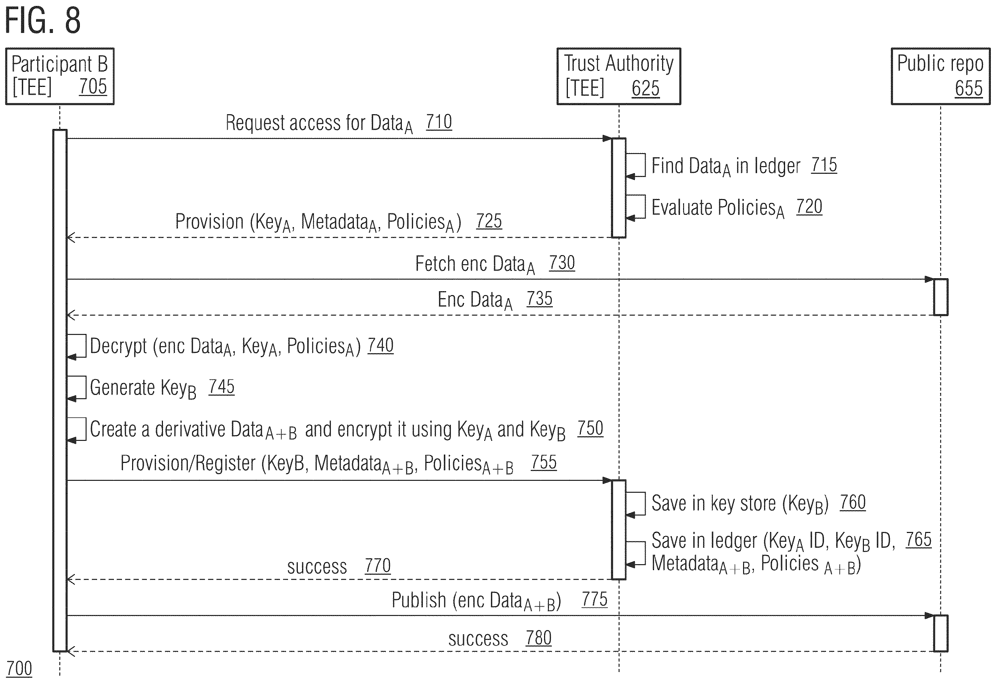

Fig. 8 depicts a sequence diagram of a method 700 for data access and derivate creation according to the present disclosure, i.e., on how previously registered data may be accessed by an authorized participant of the network, who then creates its own derivate and publishes it in the network.

The method 700 includes that a participant B 705 requests, 710, to the trust authority 625, access to previously generated data. The trust authority 625 finds, 715, the data in the immutable ledger and evaluates, 720, policies defined by its owner (participant A 605). Upon successful completion of policy evaluation and granting access, the key (first key) for the previously generated data is securely provisioned, 725, to participant B 705 together with metadata and policies. Participant B 705 fetches, 730, the encrypted data from the public repository 655 and decrypts, 740, the encrypted data using the previously provisioned key and processes the data according to the policies. Participant B 705 generates, 745, a second key and uses it together with the first key to encrypt the derivate data that is subsequently created, 750. Participant B 705 securely provisions, 755 the second key together with metadata and (updated) policies to the trust authority, 625, which saves, 760, the second key in the key store and registers, 765, new data in the immutable ledger. The trust authority 625 notifies participant B 705 of success and in turn, participant B 705 publishes, 775, encrypted derivate data in the public repository 655 which may notify, 780, participant B 705 of success of the publication.

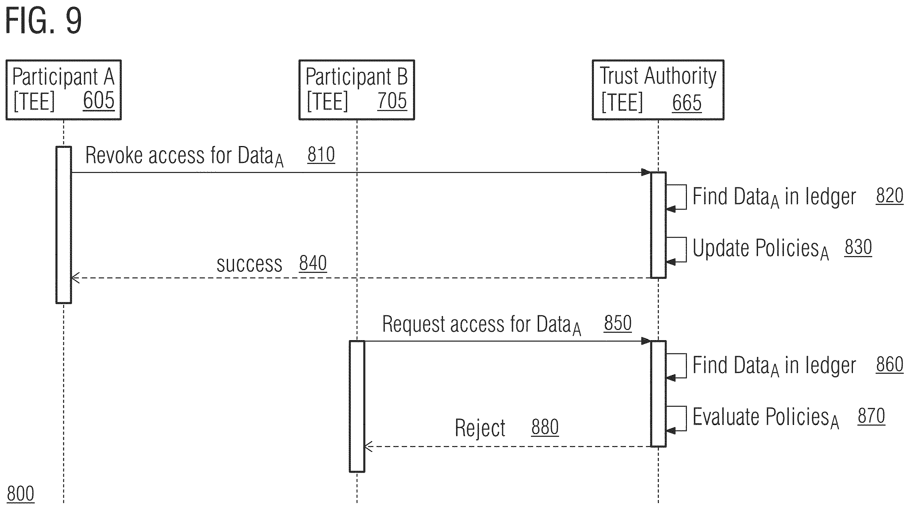

Fig. 9 depicts a sequence diagram of a method 800 for data revocation according to the present disclosure so that the data is no longer accessible or available to other network participants. The method 800 includes, by participant A 605, sending, 810 a revocation request for the data to the trust authority 625. The trust authority 625 find, 820, the data in the immutable ledger and updates, 830, its policies (e.g., effectively blocking access to the data). Upon completion, the trust authority may notify participant A 605 of success of the revocation, e.g., by issuing a certificate to Participant A 605 claiming that the data (e.g., effectively the that can decrypt it) can no longer be accessed. When participant B 705 requests, 850, to access the data, the trust authority 625, upon finding, 860, the data and evaluating, 870, the policies, rejects, 880, the request in accordance with the (updated) policies.

According to the present disclosure, the way the owners of the data protect access to their data may include encrypting their data sets. The owners may publish encrypted data sets in a public location, while provisioning the encryption keys (e.g., together with metadata including identifier of the data, the owner, location of the encrypted data, and the like) and policies regulating access to the data (e.g., time restrictions, user/group restrictions etc.) to the trusted authority that may register the information about the data and its ownership in the immutable ledger and enforce the defined data access policies. If the policies are met, the key to decrypt the data may be securely provisioned to the third party making a data access request. Confidentiality of the data and the encryption keys (while being processed) may be protected by a TEE (presence of which may be proven by the trusted authority, e.g., via remote attestation before the key is released). In case the data has more than one owner (e.g. it is derived data or contains data from multiple owners), threshold encryption may be used where, in order to decrypt the data, keys from all the owners may need to be used.

The present disclosure may be applied as follows (without limiting the present disclosure in that regard). If a user makes an order in a web store, the user may need to provide personal information including name, address and phone number. That data may have been previously encrypted and registered by the user in the network via a trusted authority using the principles of the present disclosure. If the web store wants to get access to the data, it may ask the user about the ID of the registered personal data. The web store may then requests read access to the user data from trusted authority. The trusted authority may validate the request and if it meets the policies defined by the user, it may securely provision back metadata required to fetch the encrypted user data together with the decryption keys. The web store may then fetch the data, decrypt it and use it to complete the ordering process. For example, the user may allow the web store to only once access the data or only when the user wants to make an order. On the other hand, the user may update the policies after the order such that the web store may not be able to access the user data anymore.

The present disclosure may address the problem of completely "forgetting" data that was published to a distributed network where it was processed (e.g., multiple times). Thus, the present disclosure may provide a mechanism to track the data from the moment of releasing it to the network through all the processing it has gone through and all the intermediate products of that processing (be it a new data set that contains parts of it or something more indirect like an AI model trained based on that data). This may require that a unique identifier is bound to the data while it is released to the network. All the entities that process that data may need to register a product of their processing linked with the input data. If the result of that processing is consumed by another participant in the network, that operation may also be registered, and so on. Effectively, a register in the form of tree structure may be created where root is the original data and the rest of the nodes may reflect different products either built directly or indirectly from the original data. The register may be stored in or as an immutable ledger. Trust in the network (building proper register) may be assured by running it in a trusted environment (e.g., TEE-based). The request to remove/forget the data from the network may be done in different ways, such as shallow removal or deep removal, as discussed above. Maintaining the immutable ledger that stores all the data information and regulating access to the data may be encapsulated by an independent trusted authority that ma act as a trusted guard for registering data, their owners, access policies and enforcing those policies, including the requests to remove access to the data by its owner. The request to revoke access to the data may be at least one of the following:
- Targeted to specific participants of the network (or groups) or be global (nobody can access the data anymore)
- Temporary (e.g., blocking access to the data for a specific period of time),
- Non-temporary
- Directly affecting the original data set or all derivates - in the latter case it may either revoke access to all the derivatives or allow to remove the original data set from at least a subset of the derivatives (if possible).

According to the present disclosure, users may gain a mechanism to have control over their private data while the companies/entities holding the data may use the mechanism to prove that they follow the data protection laws (such as GDPR).

For example, the present disclosure may provide a way to track the data (and all its derivatives) that have been released to a distributed network and provide a way for the data owner(s) to revoke access to it without having to depend on legal acts or regulations. The present disclosure may use an immutable ledger in order to track the data and its owners as well as a combination of a threshold cryptosystem, policies and trusted execution environments (such as Intel^{®} SGX or Intel^{®} TDX) as means to regulate access to the data by its owners, in particular to revoke the access. Also, a trust authority may be used to maintain the immutable ledger, to track the data ownership and to enforce the data access policies established by the respective data owners. With that, the data owner's request to "forget" the data may completely dismiss/restrict access to the original data set. Additionally, it may dismiss access to all its derivates, or the original data may be removed from the derivatives, leaving access to the rest of data that was not subject to the request of being "forgotten" (if possible).

Today, to a limited extent, the problem of restricting access to data by its owner may be handled in a regulated central data store, where the data owner may ask the data store owner to remove their data from the store. For example, while having an account on a given web portal (e.g., a web store), the data owner may ask the owner of the portal to remove their account, including their personal data such as identity information, home address, orders that they made, and the like, through that web store. However, such an approach may have certain drawbacks. One may be scalability/logistical feasibility of the process, meaning it may be up to the data owner to track all the instances of its data and make sure that the removal is requested in every place the data was handed over to. Another one may be that the data owner may need to trust the third party storing that data, that the removal request was indeed fulfilled properly, and all the instances of the data have been properly removed. That can easily fail either intentionally (by a malicious actor) or unintentionally (e.g. some backups of the data were not cleaned). Furthermore, different countries may have various regulations on the aspect of properly handling private data, some of them may not be regulated at all, while the others (like EU countries with GDPR) may have strict regulations. Accordingly, a request to remove the data may have very different "legal weight" depending on where the servers storing the data are located. Thus, the present disclosure may provide a way to overcome these drawbacks.

In the following, some examples of the proposed technique are presented:
An example (e.g., example 1) relates to a non-transitory machine-readable medium including machine-readable instructions. The machine-readable instructions cause, when executed on an apparatus, the apparatus to receive, by a trusted authority, a request for access to user data stored on a distributed network. The machine-readable instructions further cause the apparatus to search, by the trusted authority, an immutable ledger for an entry related to the user data. The machine-readable instructions further cause the apparatus to selectively decide, by the trusted authority and based on an access policy for the user data indicated by the entry, whether to grant access to the user data.

Another example (e.g., example 2) relates to a previous example (e.g., example 1) or to any other example. In this example, the machine-readable instructions further cause the apparatus to receive, by the trusted authority, an updated access policy. The machine-readable instructions further cause the apparatus to selectively revoke the user data based on the updated access policy.

Another example (e.g., example 3) relates to a previous example (e.g., example 2) or to any other example. In this example, for selectively revoking the user data, the machine-readable further cause the apparatus to selectively invalidate a key provided for the user data.

Another example (e.g., example 4) relates to a previous example (e.g., example 2 or 3) or to any other example. In this example, for selectively revoking the user data, the machine-readable instructions further cause the apparatus to revoke access to the user data for at least one participant in the distributed network.

Another example (e.g., example 5) relates to a previous example (e.g., any one of examples example 1 to 4) or to any other example. In this example, for selectively revoking the user data, the machine-readable instructions further cause the apparatus to revoke access to third party data. The third party data are generated by a participant in the distributed network based on the user data.

Another example (e.g., example 6) relates to a previous example (e.g., example 5) or to any other example. In this example, the third party data is derived data or is included in aggregated data.

Another example (e.g., example 7) relates to a previous example (e.g., example 6) or to any other example. In this example, if the third party data is included in aggregated data and access to the third party data is revoked, other data of the aggregated data remains accessible.

Another example (e.g., example 8) relates to a previous example (e.g., any one of examples 1 to 7) or to any other example. In this example, if access to the user data is granted, the machine-readable instructions further cause the apparatus to provision, by the trusted authority, a key to access the user data based on a remote attestation.

An example (e.g., example 9) relates to a non-transitory machine-readable medium including machine-readable instructions. The machine-readable instructions cause, when executed on an apparatus, the apparatus to receive, by a trusted authority, key data related to user data. The user data are stored or are to be stored on a distributed network. The machine-readable instructions further cause the apparatus to create, by the trusted authority, a tree-structure of an immutable ledger. The root of the tree-structure indicates at least an identifier for the user data. The machine-readable instructions further cause the apparatus to, when a participant of the distributed network generates third party data based on the user data, create, by the trusted authority, a node in the tree-structure indicating at least an identifier for the third party data.

Another example (e.g., example 10) relates to a previous example (e.g., example 9) or to any other example. In this example the user data are generated by a first participant and the third party data are generated by a second participant of the distributed network. The machine-readable instructions further cause the apparatus to, in response to a revocation of the user data, create a node in the tree-structure indicating at least an identifier for amended third party data corresponding to the third party data with indications to the user data being removed from the third party data.

Another example (e.g., example 11) relates to a previous example (e.g., example 9 or 10) or to any other example. In this example, the identifier for the user data includes a key for decrypting the user data.

Another example (e.g., example 12) relates to a previous example (e.g., example 11) or to any other example. In this example, the identifier for the third party data includes a key for decrypting the third party data generated based on the key for decrypting the user data.

An example relates (e.g., example 13) relates to an apparatus including interface circuitry, machine-readable instructions, and processing circuitry. The processing circuitry is to execute the machine-readable instructions to receive, by a trusted authority, a request for access to user data stored on a distributed network. The machine-readable instructions further include instructions to search, by the trusted authority, an immutable ledger for an entry related to the user data. The machine-readable instructions further include instructions to decide, by the trusted authority and based on an access policy for the user data indicated by the entry, whether to grant access to the user data.

Another example (e.g., example 14) relates to a previous example (e.g., example 13). In this example, the machine-readable instructions further include instructions to receive, by the trusted authority, an updated access policy. The machine-readable instructions further include instructions to selectively revoke the user data based on the updated access policy.

Another example (e.g., example 15) relates to a previous example (e.g., example 14) or to any other example. In this example, for selectively revoking the user data, the machine-readable instructions further include instructions to selectively invalidate a key provided for the user data.

Another example (e.g., example 16) relates to a previous example (e.g., example 14 or 15) or to any other example. In this example, for selectively revoking the user data, the machine-readable instructions further include instructions to revoke access to the user data for at least one participant in the distributed network.

Another example (e.g., example 17) relates to a previous example (e.g., any one of examples 14 to 16) or to any other example. In this example, for selectively revoking the user data, the machine-readable instructions further include instructions to revoke access to third party data. The third party data are generated by a participant in the distributed network based on the user data.

Another example (e.g., example 18) relates to a previous example (e.g., example 17) or to any other example. In this example, the third party data is derived data or is included in aggregated data.

Another example (e.g., example 19) relates to a previous example (e.g., example 18) or to any other example. In this example, if the third party data is included in aggregated data and access to the third party data is revoked, other data of the aggregated data remains accessible.

Another example (e.g., example 20) relates to a previous example (e.g., any one of examples 13 to 19) or to any other example. In this example, if access to the user data is granted, the machine-readable instructions further include instructions to provision, by the trusted authority, a key to access the user data based on a remote attestation.

An example (e.g., example 21) relates to an apparatus including interface circuitry, machine-readable instructions, and processing circuitry. The processing circuitry is to execute the machine-readable instructions to receive, by a trusted authority, key data related to user data. The user data are stored or are to be stored on a distributed network. The machine-readable instructions further include instructions to create, by the trusted authority, a tree-structure of an immutable ledger, wherein a root of the tree-structure indicates at least an identifier for the user data. The machine-readable instructions further include instructions to, when a participant of the distributed network generates third party data based on the user data, create, by the trusted authority, a node in the tree-structure indicating at least an identifier for the third party data.

Another example (e.g., example 22) relates to a previous example (e.g., example 21) or to any other example. In this example, the user data are generated by a first participant and the third party data are generated by a second participant of the distributed network. The machine-readable instructions further include instructions to, in response to a revocation of the user data, create a node in the tree-structure indicating at least an identifier for amended third party data corresponding to the third party data with indications to the user data being removed from the third party data.

Another example (e.g., example 23) relates to a previous example (e.g., example 21 or 22) or to any other example. In this example, the identifier for the user data includes a key for decrypting the user data.

Another example (e.g., example 24) relates to a previous example (e.g., example 23) or to any other example. In this example, the identifier for the third party data includes a key for decrypting the third party data generated based on the key for decrypting the user data.

An example (e.g., example 25) relates to a method including receiving, by a trusted authority, a request for access to user data stored on a distributed network. The method further includes searching, by the trusted authority, an immutable ledger for an entry related to the user data. The method further includes selectively deciding, by the trusted authority and based on an access policy for the user data indicated by the entry, whether to grant access to the user data.

Another example (e.g., example 26) relates to a previous example (e.g., example 25) or to any other example. In this example, the method further includes receiving, by the trusted authority, an updated access policy. The method further includes selectively revoking the user data based on the updated access policy.

Another example (e.g., example 27) relates to a previous example (e.g., example 26) or to any other example. In this example, for selectively revoking the user data, the method further includes selectively invalidating a key provided for the user data.

Another example (e.g., example 28) relates to a previous example (e.g., example 26 or 27) or to any other example. In this example, for selectively revoking the user data, the method further includes revoking access to the user data for at least one participant in the distributed network.

Another example (e.g., example 29) relates to a previous example (e.g., any one of examples example 25 to 28) or to any other example. In this example, for selectively revoking the user data, the method further includes revoking access to third party data. The third party data are generated by a participant in the distributed network based on the user data.

Another example (e.g., example 30) relates to a previous example (e.g., example 29) or to any other example. In this example, the third party data is derived data or is included in aggregated data.

Another example (e.g., example 31) relates to a previous example (e.g., example 30) or to any other example. In this example, if the third party data is included in aggregated data and access to the third party data is revoked, other data of the aggregated data remains accessible.

Another example (e.g., example 32) relates to a previous example (e.g., any one of examples 25 to 31) or to any other example. In this example, if access to the user data is granted, the method further including provisioning, by the trusted authority, a key to access the user data based on a remote attestation.

An example (e.g., example 33) relates to a method including receiving, by a trusted authority, key data related to user data. The user data are stored or are to be stored on a distributed network. The method further includes creating, by the trusted authority, a tree-structure of an immutable ledger. The root of the tree-structure indicates at least an identifier for the user data. The method further includes, when a participant of the distributed network generates third party data based on the user data, creating, by the trusted authority, a node in the tree-structure indicating at least an identifier for the third party data.

Another example (e.g., example 34) relates to a previous example (e.g., example 33) or to any other example. In this example the user data are generated by a first participant and the third party data are generated by a second participant of the distributed network. The method further includes, in response to a revocation of the user data, creating a node in the tree-structure indicating at least an identifier for amended third party data corresponding to the third party data with indications to the user data being removed from the third party data.

Another example (e.g., example 35) relates to a previous example (e.g., example 33 or 34) or to any other example. In this example, the identifier for the user data includes a key for decrypting the user data.

Another example (e.g., example 36) relates to a previous example (e.g., example 35) or to any other example. In this example, the identifier for the third party data includes a key for decrypting the third party data generated based on the key for decrypting the user data.

An example (e.g., example 37) relates to an apparatus including processor circuitry (or processing circuitry) configured to carry out a method according to a previous example (e.g., any one of examples 25 to 36) or to any other example.

Another example (e.g., example 38) relates to a computer program having a program code for performing the method of a previous example (e.g., any one of examples 25 to 36) or to any other example, when the computer program is executed on a computer, a processor, or a programmable hardware component.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components.

Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include (e.g., as processing circuitry or any other circuitry mentioned herein) computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A non-transitory machine-readable medium comprising machine-readable instructions which, when executed on an apparatus, cause the apparatus to:
receive, by a trusted authority, a request for access to user data stored on a distributed network;
search, by the trusted authority, an immutable ledger for an entry related to the user data;
selectively decide, by the trusted authority and based on an access policy for the user data indicated by the entry, whether to grant access to the user data.

2. The non-transitory machine-readable medium of claim 1, wherein the machine-readable instructions further comprise instructions to:
receive, by the trusted authority, an updated access policy; and
selectively revoke the user data based on the updated access policy.

3. The non-transitory machine-readable medium of claim 2, wherein, for selectively revoking the user data, the machine-readable instructions further comprise (i) instructions to selectively invalidate a key provided for the user data, (ii) instructions to revoke access to the user data for at least one participant in the distributed network, and/or (iii) instructions to revoke access to third party data, wherein the third party data are generated by a participant in the distributed network based on the user data.

4. The non-transitory machine-readable medium of claim 3, wherein the third-party data is derived data or is included in aggregated data.

5. The non-transitory machine-readable medium of claim 4, wherein, if the third-party data is included in aggregated data and access to the third-party data is revoked, other data of the aggregated data remains accessible.

6. The non-transitory machine-readable medium as in any one of claims 1-5, wherein, if access to the user data is granted, the machine-readable instructions further comprise instructions to:
provision, by the trusted authority, a key to access the user data based on a remote attestation.

7. A non-transitory machine-readable medium comprising machine-readable instructions which, when executed on an apparatus, cause the apparatus to:
receive, by a trusted authority, key data related to user data, wherein the user data are stored or are to be stored on a distributed network;
create, by the trusted authority, a tree-structure of an immutable ledger, wherein a root of the tree-structure indicates at least an identifier for the user data; and
when a participant of the distributed network generates third party data based on the user data, create, by the trusted authority, a node in the tree-structure indicating at least an identifier for the third-party data.

8. The non-transitory machine-readable medium of claim 7, wherein the user data are generated by a first participant and the third-party data are generated by a second participant of the distributed network, and wherein the machine-readable instructions further comprise instructions to:
in response to a revocation of the user data, create a node in the tree-structure indicating at least an identifier for amended third party data corresponding to the third-party data with indications to the user data being removed from the third-party data.

9. The non-transitory machine-readable medium of claim 7 or 8, wherein the identifier for the user data includes a key for decrypting the user data.

10. An apparatus comprising interface circuitry, machine-readable instructions, and processing circuitry to execute the machine-readable instructions to:
receive, by a trusted authority, a request for access to user data stored on a distributed network;
search, by the trusted authority, an immutable ledger for an entry related to the user data; and
decide, by the trusted authority and based on an access policy for the user data indicated by the entry, whether to grant access to the user data.

11. The apparatus of claim 10, wherein the machine-readable instructions further comprise instructions to:
receive, by the trusted authority, an updated access policy; and
selectively revoke the user data based on the updated access policy.

12. The apparatus of claim 11, wherein, for selectively revoking the user data, the machine-readable instructions further comprise (i) instructions to selectively invalidate a key provided for the user data, (ii) instructions to revoke access to the user data for at least one participant in the distributed network, and/or (iii) instructions to revoke access to third party data, wherein the third party data are generated by a participant in the distributed network based on the user data.

13. The apparatus of claim 12, wherein the third-party data is derived data or is included in aggregated data.

14. The apparatus of claim 13, wherein, if the third-party data is included in aggregated data and access to the third-party data is revoked, other data of the aggregated data remains accessible.

15. The apparatus as in any one of claims 10-14, wherein, if access to the user data is granted, the machine-readable instructions further comprise instructions to:
provision, by the trusted authority, a key to access the user data based on a remote attestation.
